# EUROPÄISCHE PATENTSCHRIFT

(11) **EP 0 492 121 B1**
(45) Veröffentlichungstag und Bekanntmachung des Hinweises auf die Patenterteilung: **09.08.1995**
(21) Anmeldenummer: 91119573.3
(22) Anmeldetag: 16.11.1991
(51) Int. Cl.: C02F 11/00, C09D 5/34, C09D 7/12, C09J 11/00, C04B 18/04, D21C 5/00

(54) **Verfahren zur Aufbereitung von bei der Papierherstellung entstehendem Abwasser-Feststoffgemisch und Verwendung des Feststoffgemisches**
Process of treating sludge from paper production effluents and use of this sludge
Procédé pour le traitement du mélange de solides des éffluents de la fabrication du papier et utilisation de ce mélange

(30) Priorität: 20.12.1990 DE 4040818; 16.03.1991 DE 4108866
(43) Veröffentlichungstag der Anmeldung: 01.07.1992
(73) Patentinhaber: Wolters, Peter, NL-7423 ED Deventer (NL); Wolters, Gerrit Jan, NL-8121 BJ Olst (NL); Wolters, Jan, NL-7411 PP Deventer (NL)
(72) Erfinder: Wolters, Peter, NL-7423 ED Deventer (NL); Wolters, Gerrit Jan, NL-8121 BJ Olst (NL); Wolters, Jan, NL-7411 PP Deventer (NL)
(74) Vertreter: Habbel, Hans-Georg, Dipl.-Ing.

(56) Entgegenhaltungen:
- FR-A- 2 462 396
- ABSTRACT BULLETIN OF THE INSTITUTE OF PAPER CHEMISTRY. Bd. 57, Nr. 10, April 1987, APPLETON US Seite 1441; THOMAS, C. O. et al.: "Waste paper fibers in cementitious composites"
- ABSTRACT BULLETIN OF THE INSTITUTE OF PAPER CHEMISTRY, Bd. 58, Nr. 7, Januar 1988, APPLETON US Seite 956; KOROL, P.V. et al.:"Manufacture if fibreboards from waste-paper processing wastes"
- Journal of Environment Engineering, Band 113, Nr. 1, Februar 1987, C.O. Thomas et al "Wastepaper Fibers in Cementitious Composites", Seiten 16-31.

## Beschreibung

Die Erfindung bezieht sich auf ein Verfahren zur Aufbereitung und Wiederverwertung des bei der Aufbereitung von Altpapier anfallenden Abwasser-Feststoffgemisches.

Bei der Herstellung von Papier werden dem Vorprodukt, d. h. Zellstoff, Holz, Strohzellstoff oder Hadernhalbstoff bzw. auch Altpapierhalbstoff Füllstoffe zugesetzt, mit denen eine geschlossene Oberfläche erzielt werden soll und wodurch der Weißgrad des Papiers verbessert werden soll.

Bei der Aufbereitung von Altpapier, um zum für die Papierherstellung erforderlichen Altpapierhalbstoff zu kommen, fallen diese Füllstoffe, die seinerzeit bei der Papierherstellung diesem nunmehr vorliegenden Altpapier zugesetzt wurden, als Abfallprodukt an. Dieses Abfallprodukt besteht z. B. aus 50 Gew. % Cellulose, 25 Gew. % Kaolin, 20 Gew. % Calciumkarbonat, wobei aber auch geringe Anteile Gips, Titanoxyd und andere Feststoffe vorliegen.

Bei der bisherigen Aufbereitung von Altpapier wird dabei so vorgegangen, daß diese Abfallstoffe als ein Abwasser-Feststoffgemisch aus dem Prozeß ausgesondert werden. Hierbei handelt es sich bisher um ein reines Abfallprodukt, das etwa zu 50 Gew. % aus Wasser und etwa zu 50 Gew. % aus Feststoffen besteht und das auf Deponien gelagert wird. Die Aufbereitung dieses Abfallproduktes, um es überhaupt deponielagerfähig zu machen, ist kostenaufwendig. Außerdem sind für den Transport dieses Abfallproduktes Kosten aufzuwenden und schließlich sind auch die Deponiekosten zu berücksichtigen, da dieses Abfallprodukt beispielsweise nicht zur Aufschüttung von Schutzdämmen geeignet ist.

So fallen in den Niederlanden etwa 100.000 t pro Jahr dieses Abfallproduktes an, das etwa zu 50 Gew. % aus Feststoffen und zu 50 Gew. % aus Wasser besteht.

In der Zeitschrift "Das Papier 26/1972" wird über diese Beseitigung der Restabwasserschlämme berichtet und dazu ausgeführt, daß zwar das Problem der Abtrennung des Schlammwassers als gelöst bezeichnet werden kann, die Frage der Schlammbeseitigung aber noch ungeklärt ist. Hier wird darauf hingewiesen, daß bei der normalen Papierproduktion der Restabwasserschlamm z. B. in Ziegeleien als Ausbrennstoff, um poröse Backsteine zu erzielen, eingesetzt wird oder daß aus Restabwasserschlamm Brandschutzfasern gewonnen werden. Auch wird die Kompostierung zur Schlammverwertung eingesetzt.

Aus der Literaturstelle "Wochenblatt für Papierfabrikation 23/24 - 1977" wird die Wiederverwendung der Asche von Abwasserschlämmen beschrieben.

In der FR-A-24 62 396 wird vorgeschlagen, daß dieses Abwasser-Feststoffgemisch mit hydraulischem Mörtel gemischt wird und ausgehärtet wird. Offensichtlich soll dann anschließend dieses ausgehärtete Gemisch einem Zerkleinerungsverfahren unterworfen werden.

In der Literaturstelle Abstract Bulletin of the Institute of Paper Chemistry, Band 58, Nr. 7, Januar 1988, Appleton US, Seite 956, Zusammenfassung Nr. 8891; P.V. Korol u.a. "Manufacture of Fiberboards from Waste-Paper Processing Wastes" wird die Verwendung des Abwasser-Feststoffgemisches zur Herstellung von Karton vorgeschlagen. Über den Wasser-Feststoffgehalt dieses zur Wiederverwertung eingesetzten Gemisches wird nichts berichtet, und weiterhin wird nichts darüber ausgeführt, ob das Abwasser-Feststoffgemisch vor Einsatz in der Kartonfabrikation behandelt wird.

Schließlich wird in der Literaturstelle "Abstract Bulletin of the Institute of Paper Chemistry, Band 57, Nr. 10,April 1987, Appleton US, Seite 1441, Zusammenfassung Nr. 13099; C.O. Thomas u. a. "Waste Paper Fibers in Cementitious Composites" über die Verwendung eines Abwasser-Feststoffgemisches in Verbindung mit Portland-Zement berichtet. Hier wird darauf hingewiesen, daß beim Einsatz von Portland-Zement die Erscheinung auftritt, daß sich die Fasern des Abwasser-Feststoffgemisches zusammenballen und Einlagerungen in der dann ausgehärteten Masse bilden, so daß diese Masse nur schwer verwendbar ist. Bei einem ersten Versuch wurde von einem Abwasser-Feststoffgemisch ausgegangen, das 35 % Feststoff enthielt und hier trat die Erscheinung auf, daß keine gleichmäßige Verteilung der Fasern in der Mischung mit Portland-Zement auftrat, sondern daß sich die Fasern zusammenballten, so daß die Festigkeit des Endproduktes beeinträchtigende Inklusionen auftraten. Es zeigte sich dann, daß eine Mischung dann gut möglich ist, wenn das Wasser-Feststoffgemisch nur 5 % Feststoffanteil aufwies. Ein solches, 95 % Wasser aufweisendes Gemisch ist nur schwer transportierbar, kann also nur in unmittelbare Nähe der Papierfabrik eingesetzt werden und verlangt natürlich einen hohen Trocknungsaufwand dann, wenn der Zement zugesetzt ist.

Der Erfindung liegt die Aufgabe zugrunde, eine Wiederverwertbarkeit des anfallenden Abwasser-Feststoffgemisches vorzuschlagen.

Zur Lösung dieser der Erfindung zugrundeliegenden Aufgabe wird vorgeschlagen, daß das schlammartige Wasser-Feststoffgemisch intensiv gemischt wird und daß dann anschließend dieses Gemisch aus Wasser und Feststoff grob, fein bzw. feinst zerkleinert wird und daß erst dann die Weiterverwendung unter Zugabe entsprechender Zusatzstoffe erfolgt.

Das Mischen des schlammartigen Feststoffgemisches ist erforderlich, da dieses Abfallgemisch bei seiner Entstehung keineswegs intensiv gemischt ist, sondern aus ganz unterschiedlichen Feststofflinsen oder Feststoffkonglomeraten bestehen kann. Das Zerkleinern des Produktes ist erforderlich, da in dem schlammartigen Feststoffgemisch eine große Zahl von faserartigen Bestandteilen enthalten ist, die bei einer Weiterverwertung des Produktes stören. Durch entsprechend dosiertes Zerkleinern dieser faserartigen Bestandteile oder Feststofflinsen wird ein je nach Einsatzzweck feinkörniges bis grobkörniges Produkt erzielt.

Das so erhaltene, aufgeschlossene Gemisch aus Wasser und Feinstfeststoffpartikel kann dann als Ausgangsstoff für die Herstellung verschiedener Werkstoffe dienen, wie beispielsweise Farbe, Leim, Kitt oder Mörtel. Ein wesentliches Merkmal dieses Ausgangsstoffes sind seine thixotropen Eigenschaften, die ihn besonders für die Herstellung der vorstehend aufgezählten verschiedenen Werkstoffe geeignet machen.

Als Ausführungsbeispiel kann darauf hingewiesen werden, daß zur Herstellung von Farbe von dem Feinstfeststoffpartikelgemisch gemäß der Erfindung ausgegangen wird, wobei diesem Feinstfeststoffpartikelgemisch Acrylat, Titanweiß, Kreide, Gips, Ammoniak und noch zusätzliches Wasser zugesetzt wird. Je nach gewünschter Art der Farbe, insbesondere auch beim Einsatz für einen Mörtel, kommt das grobkörnigere Gemisch als Ausgangsstoff in Frage.

Versuche mit einer derart hergestellten Farbe haben ergeben, daß diese Farbe allen Anforderungen an moderne Anstrichfarben gerecht wird, so daß also eine sinnvolle Wiederverwertung des an sich als Abfallprodukt anzusehenden Produktes erreicht wird.

## Patentansprüche

1. Verfahren zur Aufbereitung und Wiederverwertung des bei der Aufbereitung von Altpapier anfallenden Abwasser-Feststoffgemisches, wobei die Feststoffe sich im wesentlichen aus Cellulose, Kaolin und Calciumkarbonat zusammensetzen, dadurch gekennzeichnet, daß das schlammartige Feststoffgemisch intensiv gemischt wird und die vorhandenen Feststoffpartikel zerkleinert werden und erst dann die Weiterverwendung unter Zugabe entsprechender Zusatzstoffe erfolgt.

2. Verfahren nach Anspruch 1, dadurch gekennzeichnet, daß die Feststoffpartikel durch intensives Rühren zerkleinert werden.

3. Verfahren nach Anspruch 1, dadurch gekennzeichnet, daß die Feststoffpartikel fein gemahlen werden.

4. Verfahren nach Anspruch 1, dadurch gekennzeichnet, daß das schlammartige Feststoffgemisch vor dem Mischen und Zerkleinern entwässert wird.

5. Verfahren nach einem der Ansprüche 1 bis 3, dadurch gekennzeichnet, daß das schlammartige Feststoffgemisch vor dem Mischen und Zerkleinern zusätzlich mit Wasser ergänzt wird.

6. Verwendung des nach dem Verfahren gemäß einem der vorhergehenden Ansprüche gewonnenen, fein oder grob zerkleinerten Feststoffgemisches als Grundstoff für die Herstellung von Farbe.

7. Verwendung des nach dem Verfahren gemäß einem der Ansprüche 1 bis 5 gewonnenen, fein gemahlenen Feststoffgemisches als Grundstoff für die Herstellung von Leim.

8. Verwendung des nach dem Verfahren gemäß einem der Ansprüche 1 bis 5 gewonnenen, fein gemahlenen Feststoffgemisches als Grundstoff für die Herstellung von Kitt.

9. Verwendung des nach dem Verfahren gemäß einem der Ansprüche 1 bis 5 gewonnenen, zerkleinerten Feststoffgemisches als Zusatzstoff für Mörtel oder Putz.

## Claims

1. A process for the preparation and reutilization of the waste solids mixture arising during the preparation of waste paper, the solids being substantially composed of cellulose, kaolin and calcium carbonate, characterized in that the sludge-type solids mixture is mixed intensively and the solids particles present are reduced in size and only then does reutilization occur with the addition of appropriate additives.

2. A process according to claim 1, characterized in that the solids particles are reduced in size by intensive agitation.

3. A process according to claim 1, characterized in that the solids particles are finely ground.

4. A process according to claim 1, characterized in that the sludge-type solids mixture is dewatered before mixing and size-reduction.

5. A process according to any one of claims 1 to 3, characterized in that the sludge-type solids mixture is additionally supplemented with water before mixing and size-reduction.

6. Use of the solids mixture obtained in accordance with the process according to any one of the preceding claims and reduced to a fine or coarse size as a base material for the production of colouring matter.

7. Use of the finely ground solids mixture obtained in accordance with the process according to any one of claims 1 to 5 as a base material for the production of adhesive.

8. Use of the finely ground solids mixture obtained in accordance with the process according to any one of claims 1 to 5 as a base material for the production of filler.

9. Use of the solids mixture reduced in size and obtained in accordance with the process according to any one of claims 1 to 5 as an additive for mortar or plaster.

## Revendications

1. Procédé pour le traitement et le recyclage du mélange de solides et d'effluents aqueux produit lors du traitement du vieux papier, les solides se composant pour l'essentiel de cellulose, de kaolin et de carbonate de calcium, caractérisé en ce que le mélange boueux de substances solides est mélangé de manière intensive et les particules solides présentes sont fragmentées et alors seulement le recyclage s'effectue par ajout d'additifs correspondants.

2. Procédé selon la revendication 1, caractérisé en ce que les particules solides sont fragmentées par agitation intensive.

3. Procédé selon la revendication 1, caractérisé en ce que les particules solides sont finement fragmentées.

4. Procédé selon la revendication 1, caractérisé en ce que le mélange boueux de substances solides est déshydraté avant le mélange et la fragmentation.

5. Procédé selon l'une des revendications 1 à 3, caractérisé en ce que le mélange boueux de substances solides est de plus complété avec de l'eau avant le mélange et la fragmentation.

6. Utilisation du mélange de substances solides finement ou grossièrement fragmentées, obtenu selon l'une quelconque des revendications précédentes, comme matière première pour la fabrication de peinture.

7. Utilisation du mélange de substances solides finement fragmentées, obtenu selon l'une des revendications 1 à 5, comme matière première pour la fabrication de colle.

8. Utilisation du mélange de substances solides finement fragmentées, obtenu selon l'une des revendications 1 à 5, comme matière première pour la fabrication de mastic.

9. Utilisation du mélange de substances solides fragmentées, obtenu selon l'une des revendications 1 à 5, comme additif pour du mortier ou de l'enduit.
